# EUROPEAN PATENT SPECIFICATION

(11) **EP 4 562 296 B1**
(45) Date of publication and mention of the grant of the patent: **11.11.2026**
(21) Application number: 23745199.2
(22) Date of filing: 25.07.2023
(51) Int. Cl.: F03D 1/06

(54) **METHOD AND TOOL FOR APPLYING A PANEL TO THE SURFACE OF A WIND TURBINE BLADE**
VERFAHREN UND WERKZEUG ZUM ANBRINGEN EINER PLATTE AUF DER OBERFLÄCHE EINES WINDTURBINENROTORBLATTES
PROCÉDÉ ET OUTIL D'APPLICATION D'UN PANNEAU SUR LA SURFACE D'UNE PALE D'ÉOLIENNE

(30) Priority: 28.07.2022 GB 202211012
(43) Date of publication of application: 04.06.2025
(73) Proprietor: LM Wind Power A/S, 6000 Kolding (DK)
(72) Inventor: IQBAL, Nahid, Bengaluru 562111 (IN); JOSEPH, Sijo, Bengaluru 562111 (IN); MADURAI, Sathiyagopi, Bengaluru 562111 (IN)
(74) Representative: COPA Copenhagen Patents
(86) International application number: PCT/EP2023/070573
(87) International publication number: WO 2024/023088

(56) References cited:
- EP-A2- 2 667 019
- US-A1- 2013 129 519
- US-A1- 2022 213 867

## Description

The present disclosure relates to a method for attaching a panel to a surface of a wind turbine blade and a pressure application tool for attaching a panel to a surface of a wind turbine blade.

### BACKGROUND

Wind turbine blades are often provided with surface-mounted devices placed on a surface of the wind turbine blade, such as serration panels or vortex generator panels. Such panels are usually attached to a surface of the blades with pressure sensitive tape, for example, using several C-clamps to apply pressure to the panels. However, C-clamps make it difficult to apply the correct pressure, and the pressure is provided only in localized positions. The non-uniform pressure distribution provided due to C-clamps leads to bonding of the panels, particularly, it is difficult to provide optimal bonding along the whole surface of contact between the panel and the surface of the blade. It may also be difficult to use C-clamps with non-planar panels or non-planar surfaces of blades. Moreover, the process using C-clamps is tedious and takes a long time.

Therefore, it is desired to provide a method for attaching panels on the surface of the blade, which will allow an improved procedure of attaching the panels to the surface of the blades without the above-mentioned limitations.

Prior art is disclosed in US 2022/213867 A1.

### SUMMARY

It is an object of the invention to obtain a method for attaching a panel to a surface of a wind turbine blade and a pressure application tool for attaching a panel to a surface of a wind turbine blade, which overcome or ameliorate at least one of the disadvantages of the prior art or which provide a useful alternative.

One or more of these objects may be met by aspects of the present disclosure as described in the following.

According to a first aspect, the object is obtained by a method for attaching a panel to a surface of a wind turbine blade using a pressure application tool comprising at least two rollers, wherein the panel comprises a first attachment surface for attaching to the surface of the wind turbine blade and a second surface which faces away from the surface of the wind turbine blade, when the panel is attached to the surface of the wind turbine blade, wherein the blade having a profiled contour including a pressure side and a suction side, and a leading edge and a trailing edge with a chord having a chord length extending there between in a chordwise direction, the wind turbine blade extending in a spanwise direction between a root end and a tip end. The method comprises: placing the first attachment surface of the panel on a part of the pressure side or the suction side of the wind turbine blade with adhesive between the first attachment surface on the panel and the part of the pressure side or the suction side of the wind turbine blade; arranging the pressure application tool such that a first roller of the at least two rollers is arranged to contact the second surface of the panel, and a second roller of the at least two rollers is arranged to contact a part on the other side of the pressure side or suction side of the wind turbine blade; applying pressure using the pressure application tool to the second surface of the panel and to the part on the other side of the pressure side or suction side of the wind turbine blade; and moving the at least two rollers of the pressure application tool along a part of the panel in order to attach the panel to the surface of the wind turbine blade.

Accordingly, it is seen that the method ensures an improved bonding between the panel and the surface of the blade, because the rollers can apply a uniform pressure on the whole surface of the part of the panel. This method is compatible with both planar and non-planar panels and surfaces of the blade. By using continuous movement of the rollers along the surface of the panel and the blade, parts of non-planar surface lying in different planes are covered and the pressure is applied to these parts to provide secure bonding of non-planar panels and/or surfaces. A decreased cycle time for application of panels is also provided by the method.

According to a second aspect, the object is obtained by a pressure application tool for attaching a panel to a surface of a wind turbine blade, wherein the pressure application tool comprises: a jaw part to straddle a part of the wind turbine blade. The jaw part comprises: a first arm configured to extend along a pressure side or a suction side of the wind turbine blade, wherein the first arm is provided with at least a first roller, which is extending inwardly in the jaw part from the first arm; and a second arm configured to extend along the other of the pressure side and the suction side of the wind turbine blade, wherein the second arm is provided with at least a second roller, which is extending inwardly in the jaw part from the second arm; and a pressure application device configured to apply a pressure to the jaw part, whereby the first roller of the first arm is pressed against an outwardly facing surface of a panel to be attached on the pressure side or suction side of the wind turbine blade, and the second roller is pressed against the other of the pressure side or suction side of the wind turbine blade.

Accordingly, the pressure application tool is provided, which is compatible with both planar and non-planar panels and blade surfaces and ensures improved bonding between the panel and the surface of the blade. Moreover, manufacturing costs of the pressure application tool as described herein are relatively low.

In the following, preferred embodiments according to the above aspects are described.

According to a preferred embodiment, the method comprises applying uniform pressure by the pressure application tool while moving the at least two rollers of the pressure application tool along the part of the panel. Applying uniform or constant pressure provides an improved attachment of the panel to the surface of the blade. The applied pressure remains the same for a bonding area between the panel and the surface of the blade. A pressure-sensitive tape bonding the panel and the surface of the blade is thus being pressed and pressured consistently, which results into an improved uniformity of the adhesive distribution in the bonding are and optimizes bonding between the panel and the surface of the blade.

According to another preferred embodiment, the moving of the at least two rollers of the pressure application tool along the part of the panel is performed in a longitudinal direction of the blade. The panel extends, e.g., substantially along the longitudinal direction of the blade. Movement in a longitudinal direction of the blade provides continuous application of the pressure through the whole length of the panel, which improves bonding between the panel and the surface of the blade.

According to a preferred embodiment, the method further comprises, prior to moving the at least two rollers of the pressure application tool along the part of the panel, moving the at least two rollers towards each other to clamp the panel and a corresponding portion of the surface of the blade, e.g. in a contact point, between the first and second rollers of the at least two rollers. Moving the at least two rollers towards each other is performed, e.g., by closing the pressure application tool triggered by applying pressure using the pressure application tool. Clamping the panel between the at least two rollers provides fixing the rollers at a required position on the panel and firmly holding the panel and the part of the blade with the applied pressure to ensure that, upon moving the rollers, the pressure is applied to the whole surface of the panel.

According to another preferred embodiment, the movement of the at least two rollers towards each other is carried out at a continuous low speed movement. The continuous movement of the at least two rollers provides accurate placement on the second surface of the panel and on the part on the other side of the pressure side or suction side of the blade so that the at least two rollers are located accurately opposite each other at the contact point.

In a preferred embodiment, the method further comprises, after finishing the step of moving the at least two rollers of the pressure application tool along the part of the panel, moving the at least two rollers in a direction away from each other, e.g. by opening the pressure application tool, to release a portion of the surface of the blade with the panel attached to this portion. Releasing of the portion of the surface of the blade with the attached panel in a smooth way is thus provided, which avoids causing possible damage to this portion of the surface of the blade and breaking an attachment or bonding between the panel and the part of the blade upon releasing the blade with the attached panel.

In another preferred embodiment, the step of placing the first attachment surface of the panel on the part of the pressure side or the suction side of the wind turbine blade comprises placing the first attachment surface of the panel on a part of the trailing edge of the blade.

In yet another preferred embodiment, the step of moving the at least two rollers along the part of the panel comprises moving the at least two rollers along at least one entire length of the panel. Complete and consistent pressure applied to the pressure sensitive tape is thus provided, which results in an optimized bonding between the panel and the surface of the blade.

In a preferred embodiment, the step of moving the at least two rollers along the part of the blade comprises moving the at least two rollers along at least two or three entire lengths of the panel. By applying the pressure for a longer time, an improved bonding between the panel and the surface of the blade is thus provided.

In another preferred embodiment, the step of moving the at least two rollers along the part of the panel comprises changing a direction of movement of the at least two rollers at least once, or preferably, e.g. twice.

In yet another preferred embodiment, changing the direction of movement of the at least two rollers is performed without interruption of continuous movement of the at least two rollers, e.g. without moving the rollers away from the panel and the surface of the blade, e.g. without opening the pressure application tool. Therefore, no additional steps to place the at least two rollers again in a proper position are required due to changing the direction.

In another preferred embodiment, the adhesive is provided in form of a double-sided tape. The double-sided tape glues the first attachment surface of the panel to the part of the pressure side or the suction side of the wind turbine blade.

In yet another preferred embodiment, the adhesive comprises a pressure sensitive adhesive, preferably provided on both sides of a double-sided tape. The double-sided tape is thus glued to the first attachment surface of the panel and to the part of the pressure side or the suction side of the wind turbine blade to provide a secure attachment of the panel to the part of the blade.

In another preferred embodiment, the step of applying the pressure using the pressure application tool comprises applying a spring force, or a pneumatically driven force, or hydraulically driven force.

In yet another preferred embodiment, the method is a method of applying a serration panel on the trailing edge of the blade. The serration panel may be a non-planar serration panel in an embodiment. The method may also be a method of applying any other type of chord extender, in an embodiment.

In another preferred embodiment, the at least two rollers have a width corresponding to a bonding surface, the bonding surface is a surface where the panel contacts the surface of the blade. The pressure is thus applied to the whole bonding surface upon moving the at least two rollers and an improvement in uniformly distributing the applied pressure throughout the bonding surface is thus provided.

In yet another preferred embodiment, the method further comprises measuring the pressure applied using the pressure application tool. Control of the applied pressure is thus achieved.

The pressure application device of the pressure application tool according to a preferred embodiment is further configured to apply uniform or constant pressure to the jaw part.

The pressure application device of the pressure application tool according to another preferred embodiment is a pneumatically operated tool, or a hydraulically operated tool, or a tool comprising a spring.

The pressure application device of the pressure application tool according to yet another preferred embodiment further comprises a pneumatic cylinder, a brake lever, and a control valve; wherein the brake lever connects the first arm and the second arm with the control valve, wherein the brake lever is configured to move the first and second rollers in a direction from each other and towards each other. The brake lever acts as a connecting rod with the control valve and controls opening and closing of the pressure application tool. The brake lever is configured to open and close the pressure application tool or to control switching the pressure application tool between an open position and a closed position.

In another preferred embodiment of the pressure application tool, the brake lever is configured to continuously move the first and second rollers of the pressure application tool towards each other with a low speed.

In yet another preferred embodiment of the pressure application tool, the first and second rollers have a width corresponding to a bonding surface, the bonding surface is a surface where the panel contacts the surface of the blade. The first and second rollers have a width, also corresponding to the aforementioned attachment surface of the panel, in an embodiment.

In another preferred embodiment of the pressure application tool, the pressure application device further comprises an air pressure gauge configured to measure a pressure applied by the pressure application device, and an air pressure regulator, e.g. a regulating valve, configured to control, e.g. change the pressure applied by the pressure application device. Other types of gauges specifically designed to measure the force from the particular means for applying the force may be also used instead of the air pressure gauge in an embodiment.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 shows steps of a method for attaching a panel to a surface of a wind turbine blade,
Fig. 2 shows a schematic isometric view of a pressure application tool,
Fig. 3 shows a schematic front isometric view of a pressure application tool,
Fig. 4 shows a schematic back isometric view of a pressure application tool,
Figs. 5A - 5C show schematic views of a pressure application tool,
Fig. 6 shows a schematic view of a portion of a pressure application tool,
Fig. 7 shows a schematic view of a portion of a pressure application tool,
Fig. 8 shows a schematic view of a wind turbine,
Fig. 9 shows a schematic view of a wind turbine blade with serration panels, and
Fig. 10 shows a schematic view of a wind turbine blade with a serration panel and an operating pressure application tool.

### DETAILED DESCRIPTION

Various exemplary embodiments and details are described hereinafter with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

In the following, a number of exemplary embodiments are described in order to understand the invention.

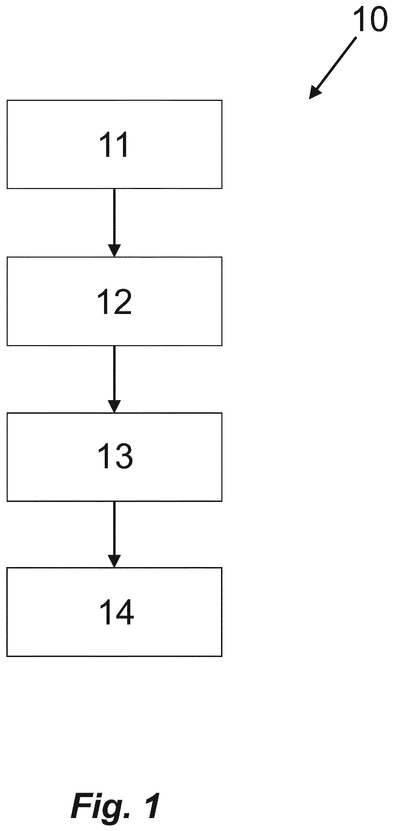

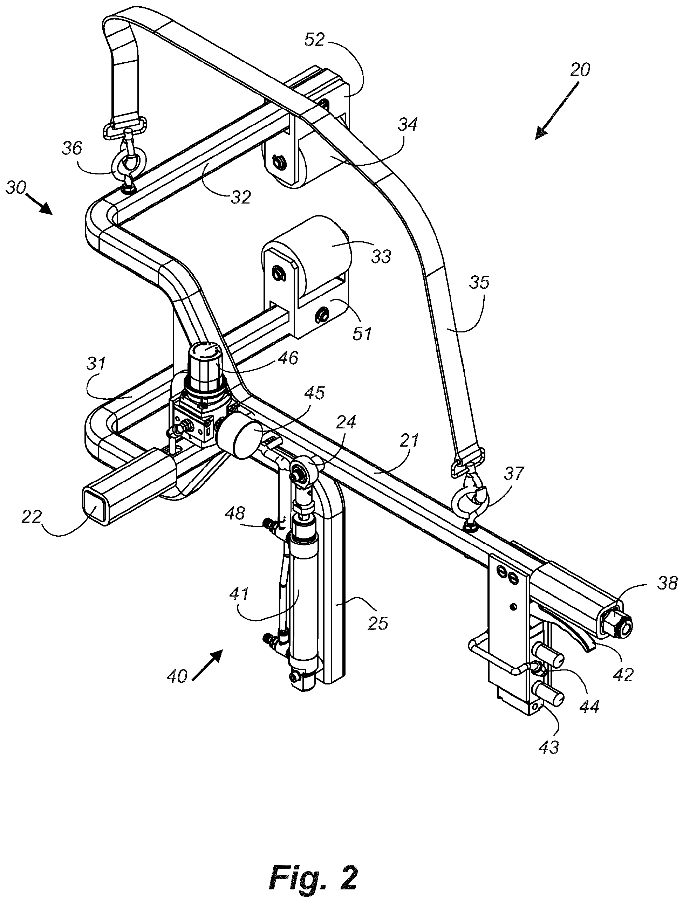

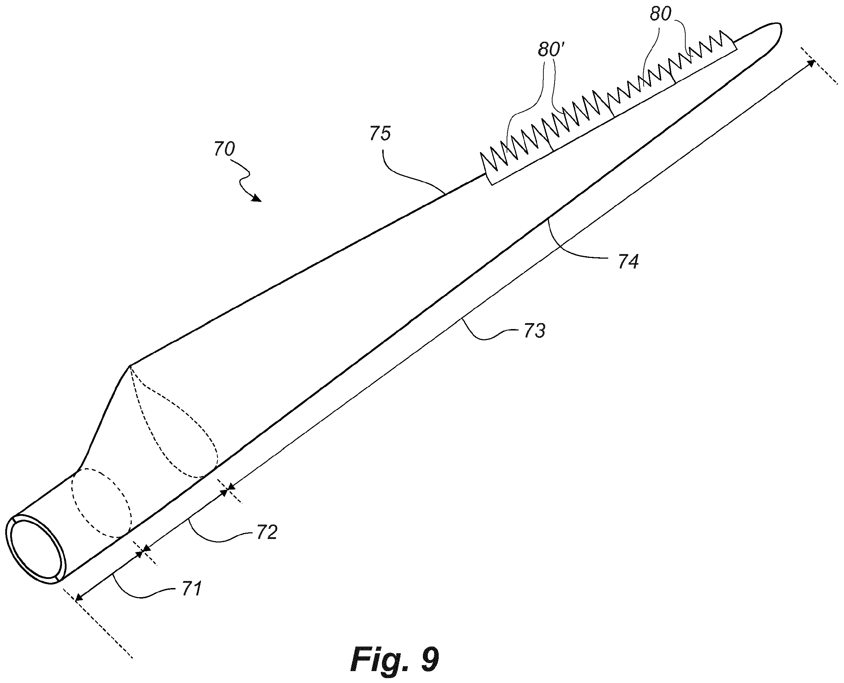

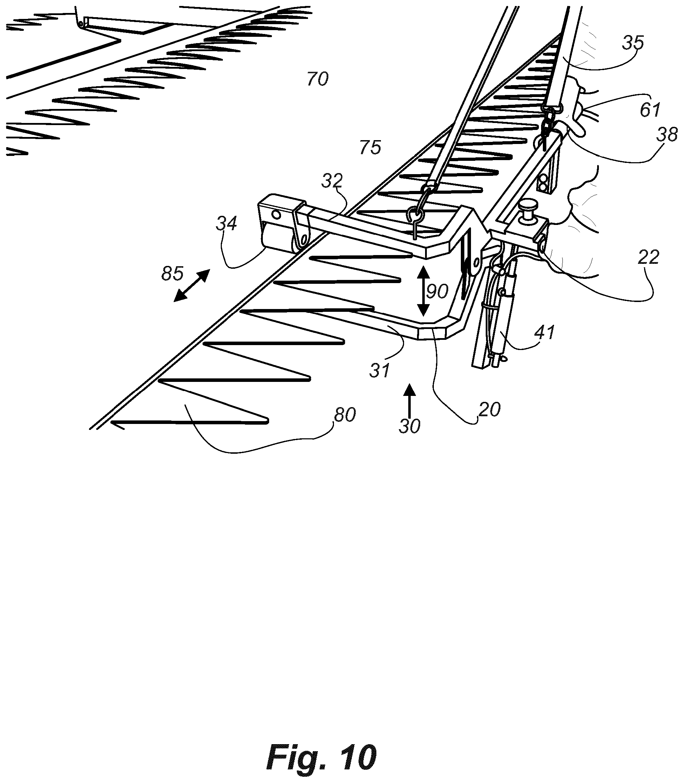

Fig. 1 shows steps of a method 10 for attaching a panel to a surface of a wind turbine blade according to the present disclosure. The method is performed using a pressure application tool comprising at least two rollers, for example, a pressure application tool 20 shown in any of Figs. 2 to 7. The panel comprises a first attachment surface for attaching to the surface of the wind turbine blade and a second surface which faces away from the surface of the wind turbine blade, when the panel is attached to the surface of the wind turbine blade. The blade has a profiled contour including a pressure side and a suction side, and a leading edge and a trailing edge with a chord having a chord length extending there between in a chordwise direction, the wind turbine blade extending in a spanwise direction between a root end and a tip end. The method may be used, for example, to provide a blade 70 with a serration panel 80 attached to a trailing edge 75 of the blade 70, as shown in Figs. 9 and 10.

In a first step 11, the first attachment surface of the panel is placed on a part of the pressure side or the suction side of the wind turbine blade with adhesive between the first attachment surface on the panel and the part of the pressure side or the suction side of the wind turbine blade.

The pressure application tool is then arranged, in a second step 12, such that a first roller of the at least two rollers is arranged to contact the second surface of the panel, and a second roller of the at least two rollers is arranged to contact a part on the other side of the pressure side or suction side of the wind turbine blade. Placement of the at least two rollers is shown, for example, in Fig. 10.

In a third step 13, pressure is applied to the second surface of the panel and to the part on the other side of the pressure side or suction side of the wind turbine blade using the pressure application tool. The at least two rollers of the pressure application tool are moved, in a fourth step 14, along a part of the panel in order to attach the panel to the surface of the wind turbine blade. The movement of the at least two rollers is shown, for example, by an arrow 85 in Fig. 10. The movement of the at least two rollers in the pressure application tool is explained with the references to the pressure application tool 20 shown in any of Figs. 2 to 7.

Step 14 may optionally comprise applying uniform pressure by the pressure application tool while moving the at least two rollers of the pressure application tool along the part of the panel. In step 14, the at least two rollers of the pressure application tool are optionally moved along the part of the panel in a longitudinal direction of the blade.

The method 10 may preferably further comprise, prior to performing the step 14 of moving the at least two rollers of the pressure application tool along the part of the panel, moving the at least two rollers towards each other to clamp the panel and a corresponding portion of the surface of the blade between the first and second rollers of the at least two rollers. This movement of the at least two rollers towards each other is preferably a continuous low speed movement. The movement of the at least two rollers is shown, for example, by an arrow 90 in Fig. 10.

The method 10 may optionally further comprise, after finishing the step 14 of moving the at least two rollers of the pressure application tool along the part of the panel, moving the at least two rollers in a direction away from each other to release a portion of the surface of the blade with the panel attached to this portion. The movement of the at least two rollers is shown, for example, by an arrow 90 in Fig. 10.

The step 11 of placing the first attachment surface of the panel on the part of the pressure side or the suction side of the wind turbine blade may optionally comprise placing the first attachment surface of the panel on a part of the trailing edge of the wind turbine blade.

The step 14 of moving the at least two rollers of the pressure application tool along the part of the panel may optionally comprise moving the at least two rollers along the at least one entire length of the panel, or preferably, along at least two or three entire lengths of the panel.

The step 14 of moving the at least two rollers of the pressure application tool along the part of the panel may optionally comprise changing a direction of movement of the at least two rollers at least once, or preferably at least twice, in the longitudinal direction of the wind turbine blade. The movement of the at least two rollers is shown, for example, by an arrow 85 in Fig. 10.

Changing the direction of movement of the at least two rollers is preferably performed without interruption of continuous movement of the at least two rollers, e.g. without opening the pressure application tool.

The adhesive used in the method 10 is optionally an adhesive in form of a double-sided tape. The adhesive may optionally comprise a pressure sensitive adhesive, preferably provided on both sides of a double-sided tape.

The step 13 of applying the pressure optionally comprises applying a spring force, or a pneumatically driven force, or hydraulically driven force.

The method 10 may optionally further comprise measuring the pressure applied using the pressure application tool.

Fig. 2 illustrates a schematic view of a pressure application tool 20 in accordance with an embodiment. Fig. 2 shows an isometric view of the pressure application tool 20. The pressure application tool 20 comprises a jaw part 30 and a pressure application device 40.

The jaw part 30 is configured to straddle a part of the wind turbine blade. The jaw part 30 comprises a first arm 31 configured to extend along a pressure side or a suction side of the wind turbine blade and a second arm 32 configured to extend along the other of the pressure side and the suction side of the wind turbine blade. The first arm 31 is provided with a first roller 33, which is extending inwardly in the jaw part 30 from the first arm 31. The second arm 32 is provided with a second roller 34, which is extending inwardly in the jaw part 30 from the second arm 32. Although the jaw part 30 is shown to comprise two rollers, more than two rollers may be used in an embodiment. The first roller 33 and the second roller 34 may optionally have a width corresponding to a bonding surface, the bonding surface is a surface where the panel contacts the surface of the blade. The first roller 33 and the second roller 34 may optionally be made of a silicone rubber, which optionally has a shore A hardness of between 30 and 40. The first roller 33 is arranged on the first arm 31 using first H-bracket 51. The second roller 34 is arranged on the second arm 32 using second H-bracket 52.

The first roller 33 and the second roller 34 are governed by the pressure application device 40. The pressure application device 40 is configured to apply a pressure to the jaw part 30. The pressure application device may be optionally configured to apply uniform pressure to the jaw part 30. The first roller 33 of the first arm 31 is pressed against an outwardly facing surface of a panel to be attached on the pressure side or suction side of the wind turbine blade. The second roller 34 is pressed against the other of the pressure side or suction side of the wind turbine blade.

The pressure application device 40 comprises a pneumatic cylinder 41. The pneumatic cylinder 41 converts compressed air energy into a reciprocating linear motion. The pressure application tool 20 is thus a pneumatically operated tool comprising the pneumatic cylinder 41. However, the pressure application tool 20 may alternatively be a hydraulically operated tool, a tool comprising a spring, or provided with other suitable means for applying a pressure. The pneumatic cylinder 41 provides opening and closing of the pressure application tool 20. The pneumatic cylinder 41 is attached to the elongated element 21 of the pressure application tool 20 by a spherical plain bearing 24. The spherical plain bearing 24 supports a shaft extending from the elongated element 21 perpendicular to the elongated element 21. In an embodiment, the pneumatic cylinder 41 may be also attached to the elongated element 21 of the pressure application tool 20 using an eyelet, such that an upper part of the pneumatic cylinder 41 is fixed in a hole of the eyelet and the eyelet is connected to the elongated element 21 to attach the pneumatic cylinder 41 to the elongated element 21. A flow control valve 48 is mounted on the pneumatic cylinder 41 and is configured to control both inlet of the flow of the compressed air into the pneumatic cylinder 41 and outlet of the air flow from the pneumatic cylinder 41 to the first arm 31 and the second arm 32.

The pressure application device 40 further comprises a brake lever 42. The brake lever 42 is configured to move the first roller 33 and the second roller 34 in a direction from each other and towards each other. The brake lever may be optionally configured to continuously move the first roller 33 and the second roller 34 of the pressure application tool 20 towards each other with a low speed. The pressure application device 40 also comprises a control valve 43. The control valve 43 is a directional control valve in an embodiment shown in Fig. 2. The brake lever 42 connects the first arm 31 and the second arm 32 with the control valve 43, thus acting as a connecting rod with the control valve 43 and controlling opening and closing of the pressure application tool 20. The control valve 43 is mounted in a control valve mounting bracket 44.

The pressure application device 40 further comprises an air pressure gauge 45 and an air pressure regulator 46. The air pressure gauge 45 is configured to measure a pressure applied by the pressure application device 40. The air pressure gauge 45 translates the force of a pneumatic system into a visual dial indicator calibrated to represent the air pressure. The air pressure regulator 46 is configured to control the pressure applied by the pressure application device 40.

The pressure application tool 20 further comprises a strap assembly 35. The strap assembly 35 is optional and may not be present in other embodiments. The strap assembly 35 is connected to the second arm 32 of the jaw part 30 through a first eye bolt assembly 36. The strap assembly 35 is connected to an elongated element 21 of the pressure application tool 20 through a second eye bolt assembly 37. The strap assembly 35 is configured to be used as a neck strap for the operator or the user to ease holding and moving of the pressure application tool 20.

The pressure application tool 20 further comprises a gripper 38, preferably a rubber gripper, used to handle the pressure application tool 20 by an operator, or a user. The pressure application tool 20 further comprises a plastic cap 22, which is configured to be used by the operator or the user upon operating the pressure application tool 20 to provide an improved stability of movement of the pressure application tool 20 upon operation.

The pressure application tool 20 is compatible with non-planar panels, e.g. non-planar serration panels, and blade surfaces.

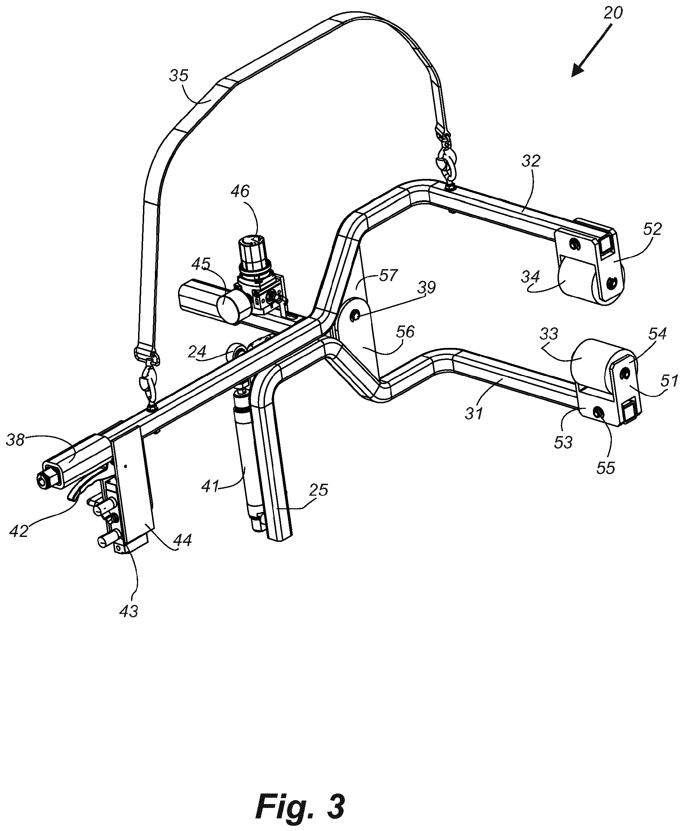

Fig. 3 shows a schematic view of an embodiment of the pressure application tool 20. Fig. 3 shows a front isometric view of the pressure application tool 20.

Fig. 3 shows the first arm 31 and the second arm 32 provided with the first roller 33 and the second roller 34 correspondingly. The first roller 33 is arranged on the first arm 31 using first H-bracket 51. A pin 55 fixes the first portion 53 of the first H-bracket 51 on the first arm 31. The first roller 33 is arranged in the second portion 54 of the first H-bracket 51 opposite to the part 53. The second roller 34 is arranged on the second arm 32 using second H-bracket 52 in the same way as the first roller 33 is arranged on the first arm 31. The second H-bracket 52 is identical to the first H-bracket 51.

The jaw part 30 further comprises a pivot pin 39 arranged between the first arm 31 and the second arm 32 and connected to the first arm 31 and to the second arm 32 through a first plate 56 and a second plate 57 correspondingly. The first plate 56 and the second plate 57 are generally connected by the pivot pin 39. The pivot pin 39 is configured to fix the first arm 31 and the second arm 32 in a closed position or in an open position.

A support element 25, which is supporting the pneumatic cylinder 41, and the spherical plain bearing 24, which is used to attach the pneumatic cylinder 41 to the elongated element 21 of the pressure application tool 20, are also shown in Fig. 3.

Fig. 3 further shows the air pressure gauge 45, the air pressure regulator 46, the control valve 43 in the control valve mounting bracket 44, the brake lever 42, and the gripper 38.

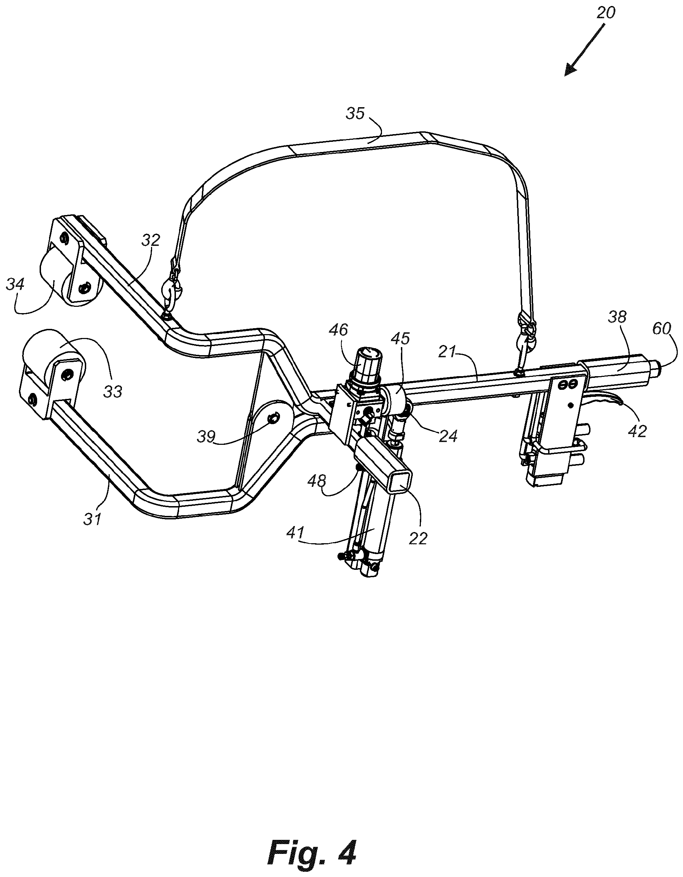

Fig. 4 shows a schematic view of the pressure application tool 20. Fig. 4 shows a back isometric view of the pressure application tool 20 shown in Fig. 3.

Fig. 4 shows the first arm 31 and the second arm 32 connected through the pivot pin 39. Fig. 4 also shows the air pressure gauge 45 and the air pressure regulator 46. The flow control valve 48 placed on the pneumatic cylinder 41 is further shown in Fig. 4. Fig. 4 also shows the brake lever 42 and an external air supply line 60, to which the pressure application tool 20 is connected to operate.

As shown in Fig. 4, the pneumatic cylinder 41 is attached to the elongated element 21 of the pressure application tool 20 by a spherical plain bearing 24. The spherical plain bearing 24 supports a shaft extending from the elongated element 21 perpendicular to the elongated element 21. In an embodiment, the pneumatic cylinder 41 may be also attached to the elongated element 21 of the pressure application tool 20 using an eyelet, such that an upper part of the pneumatic cylinder 41 is fixed in a hole of the eyelet and the eyelet is connected to the elongated element 21 to attach the pneumatic cylinder 41 to the elongated element 21.

A support element 25, which is supporting the pneumatic cylinder 41, is shown in Fig. 3.

Fig. 4 further shows a plastic cap 22, configured to be used by the operator or the user upon operating the pressure application tool 20 to provide an improved stability of movement of the pressure application tool 20 upon operation.

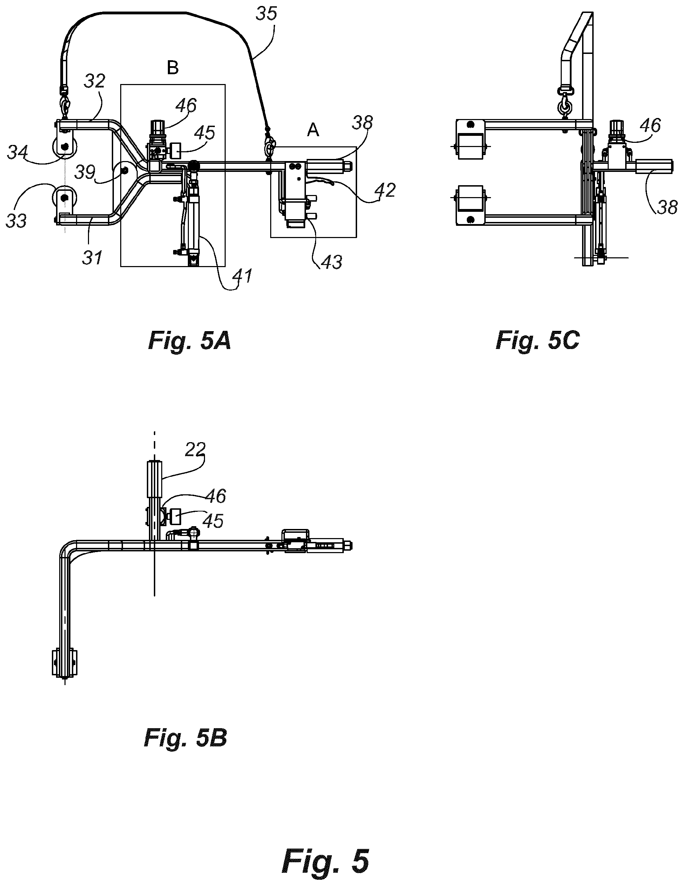

Figs. 5A-5C show schematic views of the pressure application tool 20 shown in Fig. 2.

Fig. 5A shows rear view of the pressure application tool 20. Fig. 5B shows bottom view of the pressure application tool 20. Fig. 5C shows side view of the pressure application tool 20.

Figs. 5A-5C show the same elements of the pressure application tool 20 as described with the reference to Fig. 2.

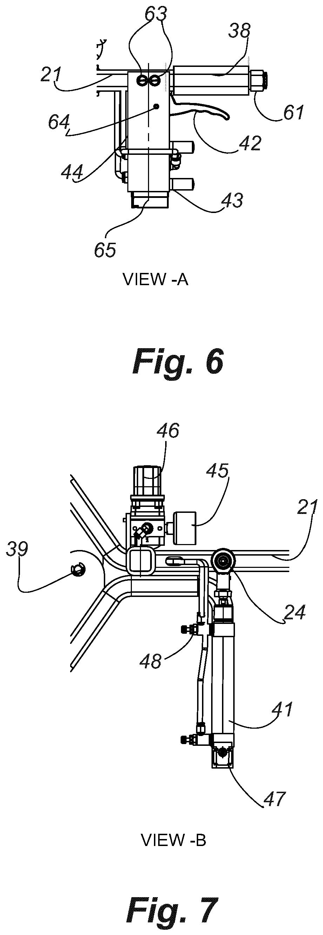

Fig. 6 shows a schematic view of a part of the pressure application tool 20. Fig. 6 shows a front view of the portion of the pressure application tool 20, shown in frame A in Fig. 5A.

Fig. 6 shows the control valve 43, the brake lever 42 and the gripper 38. The control valve 43 is fixed in the control valve mounting bracket 44 arranged at the pressure application tool 20 and fixed at the elongated element 21 of the pressure application tool 20. The control valve mounting bracket 44 is fixed at the elongated element 21 by slotted flat head screws 63. A socket head cap screw 64 is provided to fix the lever brake 42 in the control valve mounting bracket 44. Fig. 6 further shows a spring 65 of the control valve 43.

The gripper 38 is attached to the elongated element 21 of the pressure application tool 20. Fig. 6 also shows an adapter assembly 61, which is configured to connect the pressure application tool 20 to an external air source, e.g. an air supply line.

Fig. 7 shows a schematic view of a part of the pressure application tool 20. Fig. 7 shows a front view of the portion of the pressure application tool 20, shown in frame B in Fig. 5A.

Fig. 7 shows the pneumatic cylinder 41, the air pressure regulator 46 and the air pressure gauge 45. The pneumatic cylinder 41 is attached to the elongated element 21 of the pressure application tool 20 by a spherical plain bearing 24. The spherical plain bearing 24 supports a shaft extending from the elongated element 21 perpendicular to the elongated element 21. In an embodiment, the pneumatic cylinder 41 may be also attached to the elongated element 21 of the pressure application tool 20 using an eyelet, such that an upper part of the pneumatic cylinder 41 is fixed in a hole of the eyelet and the eyelet is connected to the elongated element 21 to attach the pneumatic cylinder 41 to the elongated element 21. The flow control valve 48 mounted on the pneumatic cylinder 41 is also shown in Fig. 7.

The pneumatic cylinder 41 is further supported by the support element 25, shown in Fig. 2, extending from the elongated element 21 perpendicular to the elongated element 21 and to the shaft. The pneumatic cylinder 41 is sealed on a bottom end with a head cap. The socket head cap screw 47 is shown in Fig. 7.

Fig. 7 further shows the pivot pin 39 described with the reference to Figs. 3 and 4.

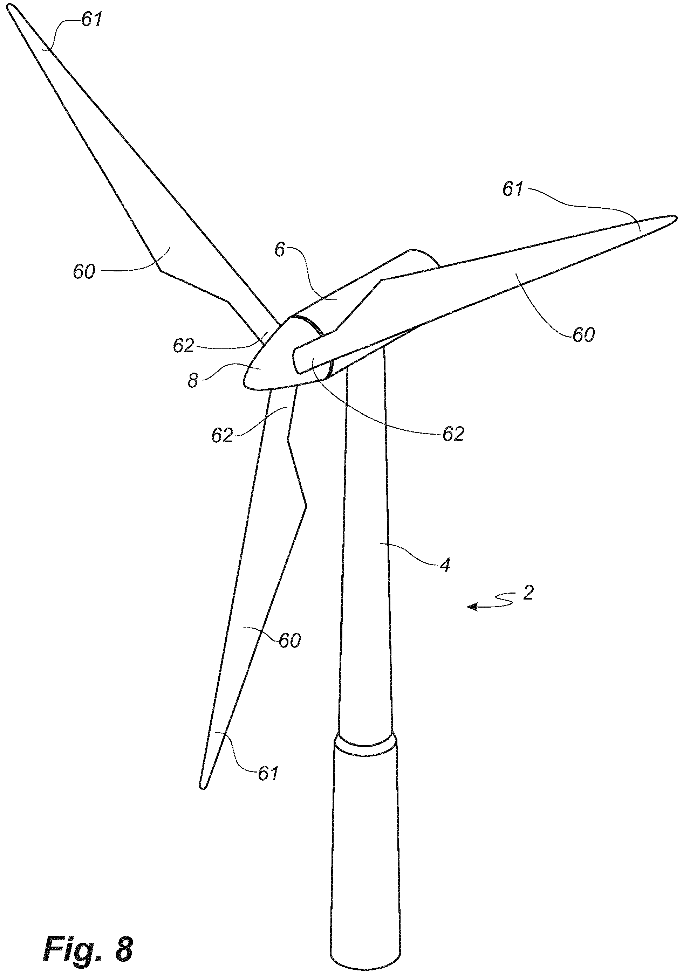

Fig. 8 illustrates a conventional modern upwind wind turbine 2 according to the so-called "Danish concept" with a tower 4, a nacelle 6 and a rotor with a substantially horizontal rotor shaft. The rotor includes a hub 8 and three blades 70 extending radially from the hub 8. The rotor has a radius denoted R.

Fig. 9 shows a schematic view of a wind turbine blade 70. The wind turbine blade 70 has the shape of a conventional wind turbine blade and comprises a root region 71 closest to the hub, a profiled or an airfoil region 73 furthest away from the hub and a transition region 72 between the root region 71 and the airfoil region 73. The blade 70 comprises a leading edge 74 facing the direction of rotation of the blade 70, when the blade is mounted on the hub, and a trailing edge 75 facing the opposite direction of the leading edge 74. An array of trailing edge serrations is provided along a portion of the trailing edge 75 of the blade. In general, flow of air over the wind turbine blade 70 extends from the leading edge 74 to the trailing edge 75 in a generally transverse or chordwise direction. While the serrations in Fig. 9 are depicted as being arranged along an outboard portion of the blade, it is recognized that the serrations may be arranged for instance closer to the root of the blade 70, or that they may be arranged along for instance the entire airfoil region 73 of the blade 70.

The serrations are provided in form of serration panels 80, 80' that are attached to a surface of the blade 70 at the trailing edge 75 of the blade 70. The serration panels 80, 80' may comprise serrations having different sizes. The serrations near the tip of the blade 70 may for instance as shown in Fig. 9 have smaller dimensions than serrations closer to the root of the blade 70.

The serration panels 80, 80' may be attached to the surface of the blade 70 by the method described with the reference to Fig. 1 and using the pressure application tool 20, shown in any of Figs. 2 to 7.

Fig. 10 shows a schematic view of the wind turbine blade 70 with the serration panel 80 and the operating pressure application tool 20. Fig. 10 shows a portion of the trailing edge 75 of the wind turbine blade 70 to which the serration panel 80 is being attached using the pressure application tool 20. The pressure application tool 20 is shown in operation, where the first roller 33 (not seen under the blade in Fig. 10) and the second roller 34 are already moved towards each other and the pressure is applied. The pressure application tool 20 is shown during movement of the first roller 33 and the second roller 34 along the serration panel 80, as described e.g. in step 14 of the method shown in Fig. 1. The pressure application tool 20 shown in any of Figs. 2 to 7 may be used.

The serration panel 80 is shown in Fig. 10 placed on a part of the trailing edge 75 of the wind turbine blade 70, e.g. in step 11 of the method shown in Fig. 1.

The first roller 33 is shown contacting the second surface of the serration panel 80, which faces away from the surface of the wind turbine blade 70. The second roller 34 is shown contacting a part on the other side of the trailing edge 75 of the wind turbine blade 70. The jaw part 30 of the pressure application tool 20 is shown in a closed position, where the first roller 33 and the second roller 34 are moved toward each other, e.g. as described in the method shown in Fig. 1, and are clamping the serration panel 80 and the corresponding portion of the surface of the trailing edge 75 of the blade 70. As may be seen in Fig. 10, the first roller 33 is located opposite the second roller 34, e.g. since the first and second rollers 33, 34 were, e.g. continuously moved towards each other in a low speed.

As shown in Fig. 10, the operator or the user is holding the pressure application tool 20 using the gripper 38 and the plastic cap 22. The strap assembly 35 is also used by the operator to provide the stable handling of the pressure application tool 20. The pressure application tool 20 is connected to the external air supply line.

The movement of the pressure application tool 20 is performed in a direction shown by an arrow 85. An arrow 90 shows a direction of movement of the first roller 33 and the second roller 34 upon closing and opening of the pressure application tool 20.

The operation of the pressure application tool 20 shown in any of Figs. 2 to 7 and 10 upon performing of the method described referring to Fig. 1 is further described.

The pressure application tool 20 is connected to the external air supply line, e.g. compressed air supply line, through the adapter assembly 61. The flow control valve 48 (shown e.g. in Fig. 2) is opened to provide flow of air, e.g. compressed air, in the pneumatic cylinder 41. An inlet air pressure of the air flowing into the pneumatic cylinder 41 is measured by the air pressure gauge 45 (shown e.g. in Fig. 2).

By pressing and holding the brake lever 42 (shown e.g. in Fig. 2), the first arm 31 and the second arm 32 and correspondingly, the first roller 33 and the second roller 34 are moved from each other to open the pressure application tool 20. The first roller 33 is placed on the second surface of the panel, which faces away from the surface of the wind turbine blade 70, e.g. the serration panel 80 shown in Figs. 9 and 10. The second roller 34 is placed on the opposite surface of the wind turbine blade 70. In an embodiment, the second roller 34 may be placed on the second surface of the panel and the first roller may be placed on the opposite surface of the wind turbine blade 70. In an embodiment, it is ensured that the corresponding roller fully covers a base part of the panel, e.g. of the serration panel 80.

The brake lever 42 is released to provide clamping of the panel between the first roller 33 and the second roller 34. The first roller 33 and the second roller 34 are moved, e.g. rolled, through the panel, e.g. through an entire length of the panel.

The scope of the invention is not limited to the illustrated embodiments, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 2: wind turbine
- 4: tower of wind turbine
- 6: nacelle of wind turbine
- 8: hub of wind turbine
- 10-14: method steps
- 20: pressure application tool
- 21: elongated element
- 22: plastic cap
- 24: spherical plane bearing
- 25: support element
- 30: jaw part of the pressure application tool
- 31: first arm
- 32: second arm
- 33: first roller
- 34: second roller
- 35: strap assembly
- 36: first eye bolt assembly
- 37: second eye bolt assembly
- 38: gripper
- 39: pivot pin
- 40: pressure application device
- 41: pneumatic cylinder
- 42: brake lever
- 43: control valve
- 44: control valve mounting bracket
- 45: air pressure gauge
- 46: air pressure regulator
- 47: socket head cap screw
- 48: flow control valve
- 51: first H-bracket
- 52: second H-bracket
- 53: first portion of the first H-bracket
- 54: second portion of the second H-bracket
- 55: pin
- 56: first plate
- 57: second plate
- 60: external air supply line
- 61: adapter assembly
- 63: slotted flat head screws
- 64: socket head cap screw
- 65: spring
- 70: wind turbine blade
- 71: root region of blade
- 72: transition region of blade
- 73: airfoil region of blade
- 74: leading edge of blade
- 75: trailing edge of blade
- 80, 80': serration panels
- 85: direction arrow
- 90: direction arrow

## Claims

1. A method (10) for attaching a panel to a surface of a wind turbine blade using a pressure application tool comprising at least two rollers,
wherein the panel comprises a first attachment surface for attaching to the surface of the wind turbine blade and a second surface which faces away from the surface of the wind turbine blade, when the panel is attached to the surface of the wind turbine blade,
wherein the blade having a profiled contour including a pressure side and a suction side, and a leading edge and a trailing edge with a chord having a chord length extending there between in a chordwise direction, the wind turbine blade extending in a spanwise direction between a root end and a tip end,
wherein the method (10) comprises:
placing (11) the first attachment surface of the panel on a part of the pressure side or the suction side of the wind turbine blade with adhesive between the first attachment surface on the panel and the part of the pressure side or the suction side of the wind turbine blade;
arranging (12) the pressure application tool such that a first roller of the at least two rollers is arranged to contact the second surface of the panel, and a second roller of the at least two rollers is arranged to contact a part on the other side of the pressure side or suction side of the wind turbine blade;
applying (13) pressure using the pressure application tool to the second surface of the panel and to the part on the other side of the pressure side or suction side of the wind turbine blade; and
moving (14) the at least two rollers of the pressure application tool along a part of the panel in order to attach the panel to the surface of the wind turbine blade.

2. The method (10) according to claim 1, wherein the method (10) comprises applying uniform pressure by the pressure application tool while moving the at least two rollers of the pressure application tool along the part of the panel.

3. The method (10) according to any of the previous claims, wherein moving (14) the at least two rollers of the pressure application tool along the part of the panel are performed in a longitudinal direction of the blade.

4. The method (10) according to any of the previous claims, wherein the method (10) further comprises, prior to moving (14) the at least two rollers of the pressure application tool along the part of the panel, moving the at least two rollers towards each other to clamp the panel and a corresponding portion of the surface of the blade between the first and second rollers of the at least two rollers, and/or wherein the method (10) further comprises, after finishing the step of moving (14) the at least two rollers of the pressure application tool along the part of the panel, moving the at least two rollers in a direction away from each other to release a portion of the surface of the blade with the panel attached to this portion.

5. The method (10) according to any of the previous claims, wherein the step of moving (14) the at least two rollers along the part of the panel comprises moving the at least two rollers along at least one entire length of the panel.

6. The method (10) according to any of the previous claims, wherein the step of moving (14) the at least two rollers along the part of the panel comprises changing a direction of movement of the at least two rollers at least once.

7. The method (10) according to any of the previous claims, wherein the adhesive comprises a pressure sensitive adhesive, preferably provided on both sides of a double-sided tape.

8. The method (10) according to any of the previous claims, wherein the method (10) is a method of applying a serration panel on the trailing edge of the blade.

9. The method (10) according to any of the previous claims, wherein the at least two rollers have a width corresponding to a bonding surface, the bonding surface is a surface where the panel contacts the surface of the blade; and/or wherein the method (10) further comprises measuring the pressure applied using the pressure application tool.

10. A pressure application tool (20) for attaching a panel to a surface of a wind turbine blade (70), wherein the pressure application tool (20) comprises:
a jaw part (30) to straddle a part of the wind turbine blade (70), wherein the jaw part (30) comprises:
a first arm (31) configured to extend along a pressure side or a suction side of the wind turbine blade (70), wherein the first arm (31) is provided with at least a first roller (33), which is extending inwardly in the jaw part (30) from the first arm (31); and
a second arm (32) configured to extend along the other of the pressure side and the suction side of the wind turbine blade (70), wherein the second arm (32) is provided with at least a second roller (34), which is extending inwardly in the jaw part (30) from the second arm (32); and
a pressure application device (40) configured to apply a pressure to the jaw part (30), whereby the first roller (33) of the first arm (31) is pressed against an outwardly facing surface of a panel to be attached on the pressure side or suction side of the wind turbine blade (70), and the second roller (34) is pressed against the other of the pressure side or suction side of the wind turbine blade (70).

11. The pressure application tool (20) according to claim 10, wherein the pressure application device (40) is further configured to apply uniform pressure to the jaw part (30).

12. The pressure application tool (20) according to any of claims 10 to 11, wherein the pressure application device (40) is a pneumatically operated tool, or a hydraulically operated tool, or a tool comprising a spring.

13. The pressure application tool (20) according to any of claims 10 to 12, wherein the pressure application device (40) further comprises a pneumatic cylinder (41), a brake lever (42), and a control valve (43); wherein the brake lever (42) connects the first arm (31) and the second arm (32) with the control valve (43), wherein the brake lever (42) is configured to move the first and second rollers (33, 34) in a direction from each other and towards each other.

14. The pressure application tool (20) according to claim 13, wherein the brake lever (42) is configured to continuously move the first and second rollers (33, 34) of the pressure application tool (20) towards each other with a low speed.

15. The pressure application tool (20) according any of claims 10 to 14, wherein the first and second rollers (33, 34) have a width corresponding to a bonding surface, the bonding surface is a surface where the panel contacts the surface of the blade; and/or wherein the pressure application device (40) further comprises an air pressure gauge (45) configured to measure a pressure applied by the pressure application device (40), and an air pressure regulator (46) configured to control the pressure applied by the pressure application device (40).

## Patentansprüche

1. Verfahren (10) zum Anbringen einer Platte auf einer Oberfläche eines Windturbinenrotorblatts unter Verwendung eines Druckaufbringungswerkzeugs, das mindestens zwei Rollen umfasst,
wobei die Platte eine erste Anbringungsoberfläche zum Anbringen auf der Oberfläche des Windturbinenrotorblatts und eine zweite Oberfläche, die von der Oberfläche des Windturbinenrotorblatts weg zeigt, umfasst, wenn die Platte an der Oberfläche des Windturbinenrotorblatts angebracht ist,
wobei das Rotorblatt eine profilierte Kontur aufweist, die eine Druckseite und eine Saugseite und eine Vorderkante und eine Hinterkante mit einer Sehne einschließt, die eine Sehnenlänge aufweist, die sich in einer Sehnenrichtung dazwischen erstreckt, wobei sich das Windturbinenrotorblatt in einer Spannweitenrichtung zwischen einem Wurzelende und einem Spitzenende erstreckt,
wobei das Verfahren (10) Folgendes umfasst:
Platzieren (11) der ersten Anbringungsoberfläche der Platte auf einem Teil der Druckseite oder der Saugseite des Windturbinenrotorblatts mit Klebstoff zwischen der ersten Anbringungsoberfläche der Platte und dem Teil der Druckseite oder der Saugseite des Windturbinenrotorblatts;
Anordnen (12) des Druckaufbringungswerkzeugs derart, dass eine erste Rolle der mindestens zwei Rollen so angeordnet ist, dass sie mit der zweiten Oberfläche der Platte in Kontakt ist, und wobei eine zweite Rolle der mindestens zwei Rollen so angeordnet ist, dass sie mit einem Teil auf der anderen Seite der Druckseite oder Saugseite des Windturbinenrotorblatts in Kontakt ist;
Aufbringen (13) von Druck auf die zweite Oberfläche der Platte und auf den Teil auf der anderen Seite der Druckseite oder Saugseite des Windturbinenrotorblatts unter Verwendung des Druckaufbringungswerkzeugs; und
Bewegen (14) der mindestens zwei Rollen des Druckaufbringungswerkzeugs entlang eines Teils der Platte, um die Platte auf der Oberfläche des Windturbinenrotorblatts anzubringen.

2. Verfahren (10) nach Anspruch 1, wobei das Verfahren (10) das Aufbringen von gleichförmigem Druck durch das Druckaufbringungswerkzeug während des Bewegens der mindestens zwei Rollen des Druckaufbringungswerkzeugs entlang des Teils der Platte umfasst.

3. Verfahren (10) nach einem der vorstehenden Ansprüche, wobei Bewegen (14) der mindestens zwei Rollen des Druckaufbringungswerkzeugs entlang des Teils der Platte in einer Längsrichtung des Rotorblatts durchgeführt wird.

4. Verfahren (10) nach einem der vorstehenden Ansprüche, wobei das Verfahren (10) weiter umfasst, vor dem Bewegen (14) der mindestens zwei Rollen des Druckaufbringungswerkzeugs entlang des Teils der Platte, das Bewegen der mindestens zwei Rollen aufeinander zu, um die Platte und einen entsprechenden Abschnitt der Oberfläche des Rotorblatts zwischen der ersten und zweiten Rolle der mindestens zwei Rollen einzuklemmen, und/oder wobei das Verfahren (10) weiter umfasst, nach dem Abschließen des Schritts des Bewegens (14) der mindestens zwei Rollen des Druckaufbringungswerkzeugs entlang des Teils der Platte, das Bewegen der mindestens zwei Rollen in einer Richtung voneinander weg, um einen Abschnitt der Oberfläche des Rotorblatts mit der an diesem Abschnitt angebrachten Platte zu lösen.

5. Verfahren (10) nach einem der vorstehenden Ansprüche, wobei der Schritt des Bewegens (14) der mindestens zwei Rollen entlang des Teils der Platte das Bewegen der mindestens zwei Rollen entlang mindestens einer gesamten Länge der Platte umfasst.

6. Verfahren (10) nach einem der vorstehenden Ansprüche, wobei der Schritt des Bewegens (14) der mindestens zwei Rollen entlang des Teils der Platte mindestens einmal das Ändern einer Bewegungsrichtung der mindestens zwei Rollen umfasst.

7. Verfahren (10) nach einem der vorstehenden Ansprüche, wobei der Klebstoff einen druckempfindlichen Klebstoff umfasst, der vorzugsweise an beiden Seiten eines doppelseitigen Klebebands bereitgestellt ist.

8. Verfahren (10) nach einem der vorstehenden Ansprüche, wobei das Verfahren (10) ein Verfahren zum Anwenden einer Verzahnungsplatte an der Hinterkante des Rotorblatts ist.

9. Verfahren (10) nach einem der vorstehenden Ansprüche, wobei die mindestens zwei Rollen eine Breite aufweisen, die einer Klebefläche entspricht, wobei die Klebefläche eine Oberfläche ist, an der die Platte mit der Oberfläche des Rotorblatts in Kontakt kommt; und/oder wobei das Verfahren (10) weiter das Messen des unter Verwendung des Druckaufbringungswerkzeugs aufgebrachten Drucks umfasst.

10. Druckaufbringungswerkzeug (20) zum Anbringen einer Platte auf einer Oberfläche eines Windturbinenrotorblatts (70), wobei das Druckaufbringungswerkzeug (20) Folgendes umfasst:
ein Backenteil (30) zum Umgreifen eines Teils des Windturbinenrotorblatts (70), wobei das Backenteil (30) Folgendes umfasst:
einen ersten Arm (31), der so ausgebildet ist, dass er sich entlang einer Druckseite oder einer Saugseite des Windturbinenrotorblatts (70) erstreckt, wobei der erste Arm (31) mit mindestens einer ersten Rolle (33) bereitgestellt ist, die sich vom ersten Arm (31) nach innen in das Backenteil (30) erstreckt; und
einen zweiten Arm (32), der so ausgebildet ist, dass er sich entlang der anderen der Druckseite und der Saugseite des Windturbinenrotorblatts (70) erstreckt, wobei der zweite Arm (32) mit mindestens einer zweiten Rolle (34) bereitgestellt ist, die sich vom zweiten Arm (32) nach innen in das Backenteil (30) erstreckt; und
eine Druckaufbringungsvorrichtung (40), die so ausgebildet ist, dass sie einen Druck auf das Backenteil (30) aufbringt, wobei die erste Rolle (33) des ersten Arms (31) gegen eine nach außen zeigende Oberfläche einer Platte gedrückt wird, die an der Druckseite oder Saugseite des Windturbinenrotorblatts (70) angebracht werden soll, und die zweite Rolle (34) gegen die andere der Druckseite oder Saugseite des Windturbinenrotorblatts (70) gedrückt wird.

11. Druckaufbringungswerkzeug (20) nach Anspruch 10, wobei die Druckaufbringungsvorrichtung (40) weiter so ausgebildet ist, dass sie gleichförmigen Druck auf das Backenteil (30) aufbringt.

12. Druckaufbringungswerkzeug (20) nach einem der Ansprüche 10 bis 11, wobei die Druckaufbringungsvorrichtung (40) ein pneumatisch betriebenes Werkzeug oder ein hydraulisch betriebenes Werkzeug oder ein Werkzeug, das eine Feder umfasst, ist.

13. Druckaufbringungswerkzeug (20) nach einem der Ansprüche 10 bis 12, wobei die Druckaufbringungsvorrichtung (40) weiter einen pneumatischen Zylinder (41), einen Bremshebel (42) und ein Regelventil (43) umfasst; wobei der Bremshebel (42) den ersten Arm (31) und den zweiten Arm (32) mit dem Regelventil (43) verbindet, wobei der Bremshebel (42) so ausgebildet ist, dass er die erste und zweite Rolle (33, 34) in einer Richtung voneinander weg und zueinander hin bewegt.

14. Druckaufbringungswerkzeug (20) nach Anspruch 13, wobei der Bremshebel (42) so ausgebildet ist, dass er die erste und zweite Rolle (33, 34) des Druckaufbringungswerkzeugs (20) kontinuierlich mit niedriger Geschwindigkeit zueinander hin bewegt.

15. Druckaufbringungswerkzeug (20) nach einem der Ansprüche 10 bis 14, wobei die erste und zweite Rolle (33, 34) eine Breite aufweisen, die einer Klebeoberfläche entspricht, wobei die Klebeoberfläche eine Oberfläche ist, an der die Platte mit der Oberfläche des Rotorblatts in Kontakt kommt; und/oder wobei die Druckaufbringungsvorrichtung (40) weiter einen Luftdruckmesser (45), der so ausgebildet ist, dass er einen Druck misst, der durch die Druckaufbringungsvorrichtung (40) aufgebracht wird, und einen Luftdruckregler (46) umfasst, der so ausgebildet ist, dass er den von der Druckaufbringungsvorrichtung (40) aufgebrachten Druck regelt.

## Revendications

1. Procédé (10) pour fixer un panneau à une surface d'une pale d'éolienne en utilisant un outil d'application de pression comprenant au moins deux rouleaux,
dans lequel le panneau comprend une première surface de fixation destinée à être fixée à la surface de la pale d'éolienne et une seconde surface qui est tournée à l'opposé de la surface de la pale d'éolienne, lorsque le panneau est fixé à la surface de la pale d'éolienne,
dans lequel la pale d'éolienne présente un contour profilé incluant un côté pression et un côté aspiration, et un bord d'attaque et un bord de fuite avec une corde présentant une longueur de corde s'étendant entre ceux-ci dans une direction de corde, la pale d'éolienne s'étendant dans une direction d'envergure entre une extrémité d'emplanture et une extrémité de bout,
dans lequel le procédé (10) comprend :
la mise en place (11) de la première surface de fixation du panneau sur une partie du côté pression ou du côté aspiration de la pale d'éolienne avec un adhésif entre la première surface de fixation sur le panneau et la partie du côté pression ou du côté aspiration de la pale d'éolienne ;
l'agencement (12) de l'outil d'application de pression de sorte qu'un premier rouleau des au moins deux rouleaux est agencé pour venir en contact avec la seconde surface du panneau, et qu'un second rouleau des au moins deux rouleaux est agencé pour venir en contact avec une partie sur l'autre côté parmi le côté pression et le côté aspiration de la pale d'éolienne ;
l'application (13) de pression en utilisant l'outil d'application de pression à la seconde surface du panneau et à la partie sur l'autre côté parmi le côté pression et le côté aspiration de la pale d'éolienne ; et
le déplacement (14) des au moins deux rouleaux de l'outil d'application de pression le long d'une partie du panneau afin de fixer le panneau à la surface de la pale d'éolienne.

2. Procédé (10) selon la revendication 1, dans lequel le procédé (10) comprend l'application de pression uniforme par l'outil d'application de pression tout en déplaçant les au moins deux rouleaux de l'outil d'application de pression le long de la partie du panneau.

3. Procédé (10) selon l'une quelconque des revendications précédentes, dans lequel le déplacement (14) des au moins deux rouleaux de l'outil d'application de pression le long de la partie du panneau est effectué dans une direction longitudinale de la pale.

4. Procédé (10) selon l'une quelconque des revendications précédentes, dans lequel le procédé (10) comprend en outre, avant le déplacement (14) des au moins deux rouleaux de l'outil d'application de pression le long de la partie du panneau, le déplacement des au moins deux rouleaux l'un vers l'autre pour serrer le panneau et une portion correspondante de la surface de la pale entre les premier et second rouleaux des au moins deux rouleaux, et/ou dans lequel le procédé (10) comprend en outre, après avoir terminé l'étape de déplacement (14) des au moins deux rouleaux de l'outil d'application de pression le long de la partie du panneau, le déplacement des au moins deux rouleaux dans une direction à l'opposé l'un de l'autre pour libérer une portion de la surface de la pale avec le panneau fixé à cette portion.

5. Procédé (10) selon l'une quelconque des revendications précédentes, dans lequel l'étape de déplacement (14) des au moins deux rouleaux le long de la partie du panneau comprend le déplacement des au moins deux rouleaux le long d'au moins une longueur entière du panneau.

6. Procédé (10) selon l'une quelconque des revendications précédentes, dans lequel l'étape de déplacement (14) des au moins deux rouleaux le long de la partie du panneau comprend le changement d'une direction de déplacement des au moins deux rouleaux au moins une fois.

7. Procédé (10) selon l'une quelconque des revendications précédentes, dans lequel l'adhésif comprend un adhésif sensible à la pression, de préférence prévu sur les deux côtés d'un ruban double face.

8. Procédé (10) selon l'une quelconque des revendications précédentes, dans lequel le procédé (10) est un procédé d'application d'un panneau à dentelure sur le bord de fuite de la pale.

9. Procédé (10) selon l'une quelconque des revendications précédentes, dans lequel les au moins deux rouleaux présentent une largeur correspondant à une surface de collage, la surface de collage étant une surface où le panneau vient en contact avec la surface de la pale ; et/ou dans lequel le procédé (10) comprend en outre la mesure de la pression appliquée en utilisant l'outil d'application de pression.

10. Outil d'application de pression (20) pour fixer un panneau à une surface d'une pale d'éolienne (70), dans lequel l'outil d'application de pression (20) comprend :
une partie mâchoire (30) pour enjamber une partie de la pale d'éolienne (70), dans lequel la partie mâchoire (30) comprend :
un premier bras (31) configuré pour s'étendre le long d'un côté pression ou d'un côté aspiration de la pale d'éolienne (70), dans lequel le premier bras (31) est muni d'au moins un premier rouleau (33), qui s'étend vers l'intérieur dans la partie mâchoire (30) depuis le premier bras (31) ; et
un second bras (32) configuré pour s'étendre le long de l'autre du côté pression et du côté aspiration de la pale d'éolienne (70), dans lequel le second bras (32) est muni d'au moins un second rouleau (34), qui s'étend vers l'intérieur dans la partie mâchoire (30) depuis le second bras (32) ; et
un dispositif d'application de pression (40) configuré pour appliquer une pression à la partie mâchoire (30), moyennant quoi le premier rouleau (33) du premier bras (31) est appuyé contre une surface tournée vers l'extérieur d'un panneau à fixer sur le côté pression ou le côté aspiration de la pale d'éolienne (70), et le second rouleau (34) est appuyé contre l'autre du côté pression et du côté aspiration de la pale d'éolienne (70).

11. Outil d'application de pression (20) selon la revendication 10, dans lequel le dispositif d'application de pression (40) est en outre configuré pour appliquer une pression uniforme à la partie mâchoire (30).

12. Outil d'application de pression (20) selon l'une quelconque des revendications 10 et 11, dans lequel le dispositif d'application de pression (40) est un outil à commande pneumatique, ou un outil à commande hydraulique, ou un outil comprenant un ressort.

13. Outil d'application de pression (20) selon l'une quelconque des revendications 10 à 12, dans lequel le dispositif d'application de pression (40) comprend en outre un vérin pneumatique (41), un levier de frein (42), et une vanne de commande (43) ; dans lequel le levier de frein (42) relie le premier bras (31) et le second bras (32) à la vanne de commande (43), dans lequel le levier de frein (42) est configuré pour déplacer les premier et second rouleaux (33, 34) dans une direction à l'opposé l'un de l'autre et l'un vers l'autre.

14. Outil d'application de pression (20) selon la revendication 13, dans lequel le levier de frein (42) est configuré pour déplacer en continu les premier et second rouleaux (33, 34) de l'outil d'application de pression (20) l'un vers l'autre à faible vitesse.

15. Outil d'application de pression (20) selon l'une quelconque des revendications 10 à 14, dans lequel les premier et second rouleaux (33, 34) présentent une largeur correspondant à une surface de collage, la surface de collage étant une surface où le panneau vient en contact avec la surface de la pale ; et/ou dans lequel le dispositif d'application de pression (40) comprend en outre une jauge de pression d'air (45) configurée pour mesurer une pression appliquée par le dispositif d'application de pression (40), et un régulateur de pression d'air (46) configuré pour contrôler la pression appliquée par le dispositif d'application de pression (40).
